# EUROPÄISCHE PATENTSCHRIFT

(11) **EP 2 541 092 B1**
(45) Veröffentlichungstag und Bekanntmachung des Hinweises auf die Patenterteilung: **21.12.2016**
(21) Anmeldenummer: 12173089.9
(22) Anmeldetag: 22.06.2012
(51) Int. Cl.: F16F 7/08, F16F 7/09

(54) **Lineardämpfer mit Freilauf**
Linear damper with free running
Amortisseur linéaire avec course libre

(30) Priorität: 01.07.2011 DE 102011106184
(43) Veröffentlichungstag der Anmeldung: 02.01.2013
(73) Patentinhaber: Hörauf & Kohler Verwaltungs KG, 86850 Fischach (DE)
(72) Erfinder: Günter, Schiele, 86156 Augsburg (DE)
(74) Vertreter: Charrier Rapp & Liebau

(56) Entgegenhaltungen:
- EP-A1- 1 219 854
- DE-A1- 2 019 134
- DE-B- 1 231 283
- FR-A- 1 096 602

## Beschreibung

Die Erfindung betrifft einen Bewegungsdämpfer nach dem Oberbegriff des Anspruchs 1.

Ein gattungsgemäßer Bewegungsdämpfer ist aus der EP 1 219 854 A1 bekannt. Dieser ist zur Dämpfung der translatorischen Bewegung von Möbelteilen ausgebildet und weist ein Gehäuse, eine gegenüber dem Gehäuse verschiebbare Kolbenstange sowie wenigstens ein an der Kolbenstange gelagertes Bremselement in Form eines O-Rings auf. Bei Bewegung der Kolbenstange in einer Bewegungsrichtung wird dieser O-Ring zur Erzeugung eines Bremsmoments über eine schräge Nut an der Kolbenstange gegen eine Innenfläche des Gehäuses gepresst. Der O-Ring befindet sich bei Bewegung der Kolbenstange in einer ersten Bewegungsrichtung in einer Dämpfungsstellung, in der das Bremselement in Kontakt mit der Innenfläche des Gehäuses steht. Bei Bewegung der Kolbenstange in einer zur ersten Bewegungsrichtung entgegengesetzten zweiten Bewegungsrichtung wird der O-Ring hingegen selbstständig in eine Freilaufstellung verschoben, in welcher der O-Ring außer Eingriff mit der Innenfläche des Gehäuses steht.

Aus der DE 20 19 134 A1 ist ebenfalls ein gattungsgemäßer Bewegungsdämpfer bekannt. Der dort gezeigte Bewegungsdämpfer ist zur Dämpfung von Stößen und Schwingungen in Kraftfahrzeugen vorgesehen. Dieser weist ebenfalls ein Gehäuse und eine gegenüber dem Gehäuse verschiebbare Kolbenstange auf. Die Bremselemente sind dabei als Bremsklötze ausgebildet, die gleichmäßig um die Kolbenstange herum angeordnet sind und über keilförmigen Gleitflächen an das Gehäuse zur Dämpfung angedrückt werden.

Die FR 1 096 602 A zeigt ebenfalls einen gattungsgemäßen Bewegungsdämpfer in Form eines Kraftfahrzeugdämpfers. Als Besonderheit sind dort Vorkehrungen getroffen, die eine Dämpfung der Bewegung einer Kolbenstange zu einem Gehäuse in beiden translatorischen Bewegungsrichtungen der Kolbenstange ermöglichen. Dies wird unter anderem dadurch erreicht, dass mehrere Bremselemente über zueinander entgegengesetzte Keilflächen betätigt werden.

Auch aus der DE 12 31 283 B ist ein entsprechender Bewegungsdämpfer bekannt. Dieser ist als Hülsenpuffer für Eisenbahnfahrzeuge ausgebildet. Das Bremselement bildet dort ein Reibring, der über konische Anlageflächen an einer als Pufferachse ausgebildeten Kolbenstange zur Dämpfung an eine Pufferhülse angedrückt wird.

Ein weiterer Bewegungsdämpfer ist aus der DE 10 2008 027 623 A1 bekannt. Darin wird eine Dämpfungsvorrichtung beschrieben, bei der ein Drehdämpfer mit Ritzel mit einer Zahnstange oder einem Zahnsegment zusammenwirkt, um eine translatorische Bewegung eines Bauteils relativ zu einem stationären Lagerbauteil zu dämpfen, wobei mindestens zwei Drehdämpfer vorgesehen sind, deren Ritzel mit der Zahnung einer Zahnstange zusammenwirken und die Drehdämpfer entweder in Reihe oder parallel angeordnet sind. Mindestens einer der beiden Drehdämpfer ist als Einwegdämpfer ausgebildet und die beiden Drehdämpfer sind so bemessen, dass sie in der einen Bewegungsrichtung ein erstes Bremsmoment erzeugen und in der entgegengesetzten Richtung ein zweites Bremsmoment, welches sich vom ersten Bremsmoment unterscheidet.

Derartige Bewegungsdämpfer werden zur Dämpfung einer translatorischen Bewegung eines Bauteils relativ zu einem stationären Lagerbauteil verwendet. So können die gattungsgemäßen Bewegungsdämpfer beispielsweise zur Dämpfung der Bewegung einer beweglich gelagerten Klappe Verwendung finden, beispielweise bei einem Handschuhfachdeckel in einem Kraftfahrzeug. Bei diesen Anwendungen ist es häufig wünschenswert, dass der Bewegungsdämpfer die Bewegung des Bauteils, welches an einem stationären Lagerbauteil angelenkt ist, nur in einer Bewegungsrichtung dämpft und in der entgegengesetzten Bewegungsrichtung keinen oder einen wesentlich geringeren Dämpfungswiderstand erzeugt. So ist es beispielsweise bei der Dämpfung der Bewegung eines Handschuhfachdeckels eines Kraftfahrzeugs vorteilhaft, wenn nur die Öffnungsbewegung des Handschuhfachdeckels gedämpft wird, die Schließbewegung jedoch weitgehend ungedämpft und weitgehend ohne Bremswiderstand erfolgen kann. Hierfür sind gattungsgemäße Bewegungsdämpfer bekannt, welche eine translatorische Bewegung des Bauteils relativ zu dem stationären Lagerbauteil in einer Bewegungsrichtung dämpfen und in der entgegengesetzten Bewegungsrichtung einen Freilauf mit einem wesentlich geringeren Bremsmoment aufweisen. Ein weiterer Bewegungsdämpfer dieser Art ist aus der DE 295 18 173 U1 bekannt.

Weitere aus dem Stand der Technik bekannte Bewegungsdämpfer mit Freilauf weisen als Dämpfungselement einen oder mehrere Drehdämpfer auf, welche ein mit einer zähen Flüssigkeit gefülltes Gehäuse umfassen, in dem ein Bremsrotor drehbar gelagert ist. Das von dem Drehdämpfer erzeugte Bremsmoment hängt von der Ausgestaltung des Bremsrotors und der Viskosität der zähen Flüssigkeit ab. Der dämpfende Bremsrotor ist über ein Zahnrad an eine Zahnstange gekoppelt, um die Drehbewegung des Drehdämpfers in eine translatorische Bewegung zu übertragen.

Die bekannten Bewegungsdämpfer, welche als Dämpfungselement einen oder mehrere Drehdämpfer aufweisen, haben sich als nachteilig erwiesen, weil das Bremsmoment aufgrund der Temperaturabhängigkeit der Viskosität der Dämpfungsflüssigkeit stark von der Umgebungstemperatur abhängt. Dies kann insbesondere bei Anwendungen in Kraftfahrzeugen Probleme verursachen, da dort hohe Temperaturunterschiede auftreten können. Die gattungsgemäßen Bewegungsdämpfer mit einem oder mehreren Drehdämpfern als Dämpfungselement sind auch deshalb nachteilig, weil es durch die Koppelung des Drehdämpfers über ein Zahnrad an eine Zahnstange zu Geräuschentwicklungen kommen kann.

Hiervon ausgehend liegt der Erfindung die Aufgabe zugrunde, einen Lineardämpfer bereitzustellen, mit dem eine zumindest komponentenweise translatorische Bewegung eines Bauteils relativ zu einem stationären Lagerbauteil möglichst laufruhig und geräuscharm sowie mit einem temperaturunabhängigen Bremsmoment gedämpft werden kann, wobei in einer Bewegungsrichtung ein erstes Bremsmoment und in der entgegengesetzten Bewegungsrichtung des Bauteils ein zweites, hierzu kleineres Bremsmoment erzeugt werden soll.

Gelöst werden diese Aufgaben mit einem Bewegungsdämpfer mit den Merkmalen des Anspruchs 1. Bevorzugte Ausführungsbeispiele dieses Bewegungsdämpfers ergeben sich aus den abhängigen Ansprüchen.

Der erfindungsgemäße Bewegungsdämpfer zeichnet sich dadurch aus, dass das oder jedes Bremselement in einem Führungselement frei beweglich gelagert ist, wobei das Führungselement an der Kolbenstange angeordnet und zwischen einer ersten Grenzstellung und einer zweiten Grenzstellung gegenüber der Kolbenstange in Längsrichtung verschiebbar ist. Wenn sich bei diesem Ausführungsbeispiel nach einer Änderung der Bewegungsrichtung der Kolbenstange gegenüber dem Gehäuse das Führungselement von seiner ersten Grenzstellung in seine zweite Grenzstellung bewegt, wird das oder jedes Bremselement von seiner Dämpfungsstellung in seine Freilaufstellung verschoben. Dabei bewegt sich das Bremselement in radialer Richtung von außen nach innen in Richtung der Mittelachse (Längsachse) der Kolbenstange, so dass die Bremsfläche des Bremselements nicht mehr an der Innenfläche des Gehäuses anliegt. Wird die Kolbenstange anschließend wieder in der einen Bewegungsrichtung gegenüber dem Gehäuse verschoben, bewegt sich das Führungselement von der zweiten Grenzstellung wieder zurück in die erste Grenzstellung und schiebt dabei das Bremselement in radialer Richtung nach außen, so dass die Bremsfläche des Bremselements gegen eine Innenfläche des Gehäuses gedrückt wird und auf diese Weise das erste (hohe) Bremsmoment erzeugt. Hierfür ist das oder jedes Bremselement in dem jeweils zugeordneten Führungselement frei beweglich und entlang von zueinander korrespondierenden Schrägflächen am an der Kolbenstange und am Führungselement sowie am Bremselement verschieblich gelagert.

Dies ermöglicht, dass sich das oder jedes Bremselement bei Bewegung der Kolbenstange in der einen Bewegungsrichtung in einer Dämpfungsstellung befindet, in der das Bremselement in Kontakt mit der Innenfläche des Gehäuses steht und so ein relativ hohes Bremsmoment erzeugt und dass das Bremselement bei Bewegung der Kolbenstange in der entgegengesetzten Bewegungsrichtung selbsttätig in eine Freilaufstellung verschoben wird, in der das Bremselement keinen Kontakt mit der Innenfläche des Gehäuses hat, wodurch in dieser entgegengesetzten Bewegungsrichtung kein bzw. ein gegenüber dem ersten Bremsmoment wesentlich kleineres zweites Bremsmoment erzeugt wird. Zweckmäßig ist dazu das oder jedes Bremselement an einer Schrägfläche der Kolbenstange beweglich gelagert und entlang dieser Schrägfläche verschiebbar, wobei die Schrägfläche mit der Längsachse der Kolbenstange einen spitzen Winkel einschließt, der bevorzugt größer als 7° ist und in einem bevorzugten Ausführungsbeispiel 12° beträgt.

Zur Erzielung eines möglichst hohen ersten Bremsmoments ist das oder jedes Bremselement mit einer Bremsfläche versehen, welche aus einem Weichkunststoff wie zum Beispiel Polyester-Urethan-Kautschuk, Silikonkautschuk oder Chloropren-Kautschuk (Polychloropren oder Chlorbutadien-Kautschuk) gebildet ist.

In einem Ausführungsbeispiel des erfindungsgemäßen Bewegungsdämpfers ist das oder jedes Bremselement durch die Rückstellkraft einer Feder in seiner Dämpfungsstellung vorgespannt und die selbsttätige Bewegung des Bremselements von der Dämpfungsstellung in die Freilaufstellung erfolgt entgegen der Rückstellkraft der Feder, wenn die Kolbenstange gegenüber dem Gehäuse in entgegengesetzter Bewegungsrichtung verschoben wird.

Bei dem erfindungsgemäßen Bewegungsdämpfer kann auf die Verwendung eines Drehdämpfers, dessen Bremsmoment stark temperaturabhängig ist, verzichtet werden. Das von dem erfindungsgemäßen Bewegungsdämpfer in der einen Bewegungsrichtung erzeugte hohe Bremsmoment ist aus diesem Grunde im Wesentlichen temperaturunabhängig. Weiterhin kann bei dem erfindungsgemäßen Bewegungsdämpfer eine Kopplung des Dämpfungselements an eine Zahnstange entfallen, weshalb die Bewegung des Bewegungsdämpfers wesentlich geräuscharmer ist als bei den bekannten Bewegungsdämpfern mit einem oder mehreren Drehdämpfern als Dämpfungselement.

Diese und weitere Vorteile des erfindungsgemäßen Bewegungsdämpfers ergeben sich aus den nachfolgend unter Bezugnahme auf die begleitenden Zeichnungen näher beschriebenen Ausführungsbeispielen. Die Zeichnungen zeigen:
- **Figur 1:**: Darstellung eines ersten Ausführungsbeispiels eines Bewegungsdämpfers in einer perspektivischen Ansicht (Fig. 1a) einer Seitenansicht (Fig. 1b), einer Draufsicht (Fig. 1c) und einer Vorderansicht (Fig. 1d);
- **Figur 2:**: Darstellung des Bewegungsdämpfers von Fig. 1 mit durchscheinendem Gehäuse (Fig. 2b) sowie Darstellung der Einzelteile dieses Bewegungsdämpfers (Fig. 2c - Fig. 2f);
- **Figur 3:**: Detailansicht des Dämpfungselements des Bewegungsdämpfers von Figur 1 in einer perspektivischen Ansicht (Fig. 3a) und einer Explosionsdarstellung (Fig. 3b);
- **Figur 4:**: Perspektivische Darstellung des Dämpfungselements von Figur 3 im Einbauzustand, wobei das Gehäuse des Bewegungsdämpfers zur Verdeutlichung im Aufriss gezeigt ist;
- **Figur 5:**: Darstellung des Funktionsprinzips des Bewegungsdämpfers von Figur 1, wobei Figur 5a das Dämpfungselement in einer Detailansicht bei einer Bewegung der Kolbenstange in einer ersten Bewegungsrichtung und Figur 5b das Dämpfungselement bei Bewegung der Kolbenstange in entgegen gesetzter Bewegungsrichtung relativ zum Gehäuse des Bewegungsdämpfers zeigt;
- **Figur 6:**: Darstellung eines erfindungsgemäßen zweiten Ausführungsbeispiels eines Bewegungsdämpfers in einer perspektivischen Draufsicht (Fig. 6a), einer perspektivischen Seitenansicht (Fig. 6b) und einer Vorderansicht (Fig. 6c) sowie einer perspektivischen Seitenansicht (Fig. 6d) im Aufriss zur Darstellung der innerhalb des Gehäuses angeordneten Teile des Bewegungsdämpfers ;
- **Figur 7:**: Perspektivische Detaildarstellung des Dämpfungselements des Bewegungsdämpfers von Figur 6 in einer perspektivischen Seitenansicht (Fig. 7a) und einer teilweise im Aufriss dargestellten Ansicht zur Darstellung der Einzelteile des Dämpfungselements (Fig. 7b);
- **Figur 8:**: Perspektivische Detaildarstellung des Dämpfungselements des Bewegungsdämpfers von Figur 6 in einer perspektivischen Seitenansicht im Teilschnitt (Fig. 8a) mit herausgenommenen Bremselementen und in einer perspektivischen Seitenansicht im Teilschnitt (Fig. 8a) mit eingesetzten Bremselementen;
- **Figur 9:**: Erläuterung des Funktionsprinzips des Dämpfungselements von Figur 8, wobei Figur 9a das Dämpfungselement bei Bewegung der Kolbenstange im Freilauf und Figur 9b bei Bewegung der Kolbenstange im Bremshub zeigt;
- **Figur 10:**: Darstellung einer abgewandelten Ausführungsform des Dämpfungselements des ersten Ausführungsbeispiels eines Bewegungsdämpfers in einer perspektivischen Ansicht mit aufgesetzter Kappe (Fig. 10a) einer perspektivischen Ansicht mit abgezogener Kappe (Fig. 10b) und einer Explosionsdarstellung (Fig. 10c),
- **Figur 11:**: Vergleichende Darstellung des Dämpfungselements von Fig. 10 in zwei verschiedenen Ausführungsvarianten, wobei Figur 11b die Ausführungsvariante der Figur 10 und Figur 11a eine abgewandelte Ausführungsvariante zeigt.

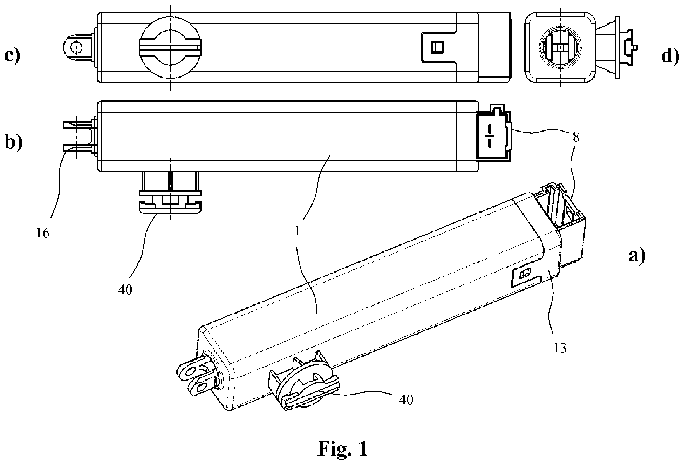

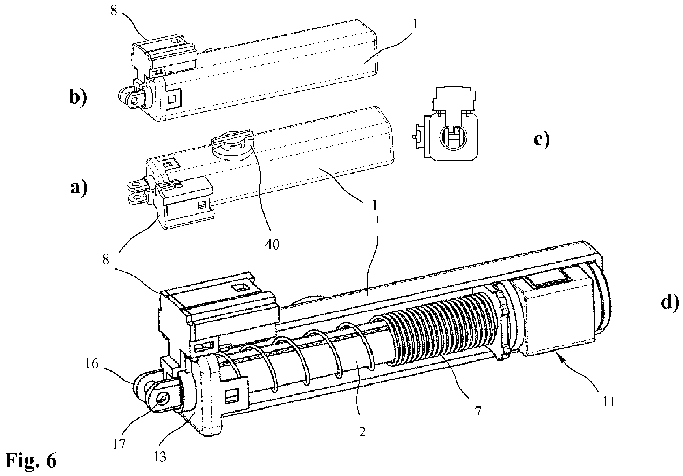

Das in den Figuren 1 bis 5 sowie 10 und 11 gezeigte erste Ausführungsbeispiel fällt nicht unter den Schutzbereich der Erfindung und dient lediglich der Erläuterung des erfindungsgemäßen zweiten Ausführungsbeispiels gemäß den Figuren 6 bis 9.

Die beiden hier zeichnerisch dargestellten Ausführungsbeispiele eines Bewegungsdämpfers zeichnen sich durch ein Gehäuse 1 und eine darin verschiebbare Kolbenstange 2 sowie ein im Inneren des Gehäuses angeordnetes Dämpfungselement 11 aus. Bei beiden Ausführungsbeispielen ist bevorzugt ein Kontaktschalter 8 am Gehäuse 1 angeordnet. Der Kontaktschalter 8 verfügt über zwei elektrische Kontakte 8a, 8b, welche über ein an einem Ende der Kolbenstange angeordnetes Steuerglied 9 geöffnet bzw. geschlossen werden können. Der Kontaktschalter 8 dient zum Ein- bzw. Ausschalten einer Beleuchtung, beispielsweise einer Innenbeleuchtung eines Handschuhkastens.

Das Gehäuse 1 ist in den zeichnerisch dargestellten Ausführungsbeispielen im Wesentlichen vierkantrohrförmig ausgebildet, wobei die Stirnseiten durch einstückig angeformte oder aufgesetzte Deckel abgeschlossen sind. Andere Formen des Gehäuses, wie zum Beispiel zylindrische Formen, sind jedoch möglich. Das Gehäuse 1, die verschieblich im Gehäuse 1 angeordnete Kolbenstange 2, die im Inneren des Gehäuses angeordnete Bremseinrichtung 11 sowie das Gehäuse des Kontaktschalters 8 sind jeweils als Kunststoffspritzgussteile hergestellt. An der Außenseite des Gehäuses 1 ist ein Befestigungsteil 40 angeformt zur Befestigung des Gehäuses 1 an einem stationären Lagerbeauteil, bspw. der Innenfläche eines Handschuhkastens eines Fahrzeugs.

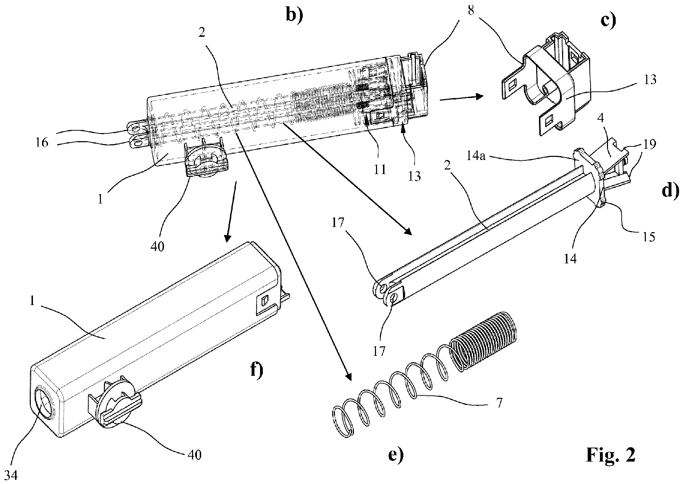

Bei dem in den Figuren 1 und 2 gezeigten Ausführungsbeispiel ist das Gehäuse 1 an seiner vorderen Stirnseite durch einen einstückig angeformten Deckel und an seiner hinteren Stirnseite durch einen am Gehäuse 1 mittels eines Rastmechanismus befestigten Deckel 13 verschlossen, welcher gleichzeitig das Gehäuse für den Kontaktschalter 8 bildet. In dem vorderen Deckel ist eine Öffnung 34 vorgesehen, durch die die Kolbenstange 2 aus dem Gehäuse 1 herausgezogen werden kann. Im Inneren des Gehäuses 1 ist die Kolbenstange 2 gegen die Rückstellkraft einer Kolbenfeder 7 beweglich gelagert. Hierzu verfügt die Kolbenstange 2 an ihrem hinteren Ende über einen am Außenumfang umlaufenden Flansch 14 mit Führungsnasen 15, welche bei eingeschobener Kolbenstange 2 an den Innenflächen des Gehäuses anliegen. Die Kolbenfeder 7 ist zwischen der Innenfläche des einstückig angeformten vorderen Deckels und der Vorderfläche 14a des Flansches 14 eingespannt und drückt die Kolbenstange in ihre Grundstellung, in der sie im Wesentlichen vollständig in das Gehäuse 1 eingeschoben ist. In einem hier zeichnerisch nicht dargestellten Ausführungsbeispiel kann auch auf die Kolbenfeder 7 verzichtet werden.

In der Grundstellung ragt lediglich noch das vordere Ende der Kolbenstange 2 aus dem Gehäuse 1 heraus, an dem zwei Befestigungsansätze 16 mit Bohrungen 17 zur Verbindung der Kolbenstange mit einem zu bewegenden Bauteil, bspw. dem Deckel eines Handschuhkastens, angeordnet sind.

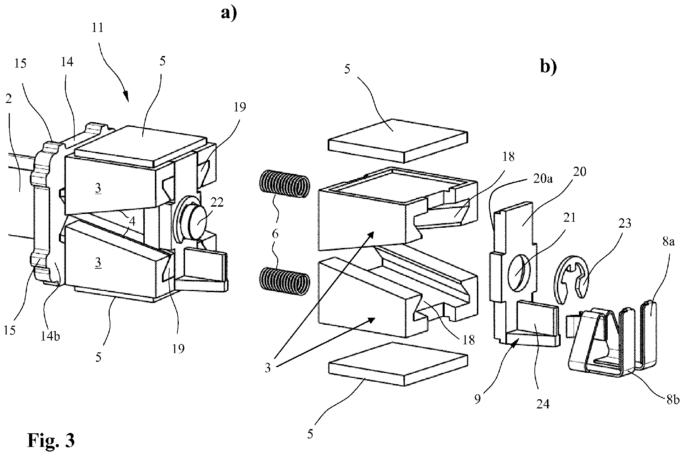

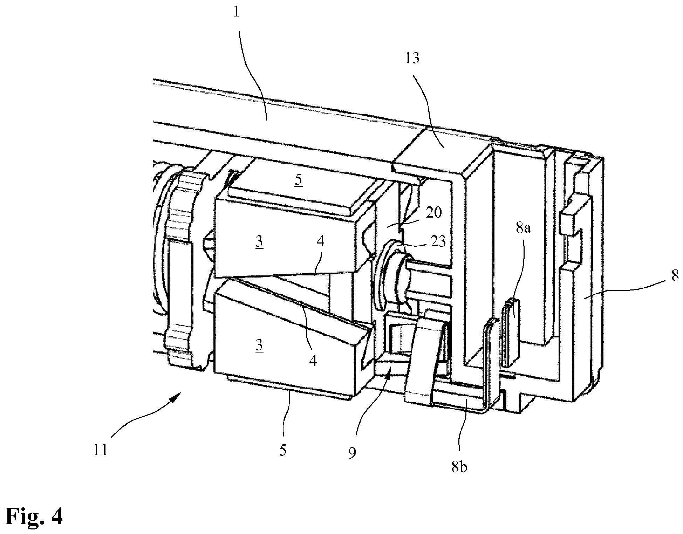

In den Figuren 3 und 4 ist die Dämpfungseinrichtung 11 im Detail dargestellt. Die Dämpfungseinrichtung 11 umfasst in diesem Ausführungsbeispiel zwei an der Kolbenstange 2 beweglich gelagerte Bremselemente 3. Jedes Bremselement 3 weist eine Bremsfläche 5 auf, welche aus einem Weichkunststoff gefertigt ist. Zweckmäßig ist hierfür an der Außenseite jedes Bremselements 3 ein austauschbarer Bremsbelag aus Weichkunststoff befestigt. Jedes Bremselement 3 weist eine im Wesentlichen keilförmige Gestalt auf und verfügt zweckmäßig über eine schwalbenschwanzförmige Führungsnut 18. Über die Führungsnut 18 ist jedes Bremselement 3 an komplementär dazu ausgebildeten Führungsflügeln 19, welche am hinteren Ende der Kolbenstange 2 angeformt sind, geführt. Das hintere Ende der Kolbenstange 2 mit den Führungsflügeln 19 ist keilförmig ausgebildet, so dass die keilförmigen Bremselemente 3 an dem hinteren Ende der Kolbenstange 2 passgenau angeordnet werden können. Das keilförmig ausgebildete Ende der Kolbenstange 2 bildet auf diese Weise für jedes Bremselement eine Schrägfläche, welche mit der Längsachse der Kolbenstange einen spitzen Winkel α einschließt und welche eine Gleitfläche für die keilförmigen Bremselemente 3 bildet. Die Bremselemente 3 können jeweils entlang der Schrägflächen 4 am hinteren Ende der Kolbenstange 2 gleitend gegen die Rückstellkraft einer Feder 6 verschoben werden. Hierzu ist jedem Bremselement 3 eine Feder 6 zugeordnet, welche zwischen der vorderen Stirnseite des jeweiligen Bremselements 3 und der Rückseite 14b des Flansches 14 der Kolbenstange 2 angeordnet ist. Zur Sicherung der Bremselemente 3 auf den Schrägflächen 4 am hinteren Ende der Kolbenstange 2 ist ein Anschlag 20 vorgesehen, der in der Ausführungsvariante der Figuren 3 und 4 als Anschlagplatte mit einer zentralen Bohrung 21 ausgebildet ist, durch welche ein Endzapfen 22 der Kolbenstange 2 durchgreift. Die Anschlagplatte 20 ist über einen am Endzapfen 22 eingreifenden Sicherungsring 23 an der Kolbenstange 2 befestigt. An der Anschlagplatte 20 ist ein nach hinten vorstehender Ansatz 24 angeformt, welcher ein Steuerglied 9 zum Öffnen bzw. Schließen der Kontakte 8a, 8b des Kontaktschalters 8 bildet.

Die im Wesentlichen keilförmig ausgebildeten Bremselemente 3 sind entlang der an der Kolbenstange 2 angeordneten Schrägfläche 4 zwischen einer ersten Grenzstellung, in der sich das jeweilige Bremselement 3 in seiner Dämpfungsstellung befindet, und einer zweiten Grenzstellung, in der sich das Bremselement 3 in seiner Freilaufstellung befindet, beweglich gelagert. In der ersten Grenzstellung (Dämpfungsstellung) liegt die hintere Stirnfläche 3a der Bremselemente 3 am Anschlag 20 an der durch die Vorderfläche der Anschlagplatte gebildet ist. In der zweiten Grenzstellung (Freilaufstellung) liegt die vordere Stirnfläche 3b der Bremselemente 3 an der Rückseite 14b des Flansches 14 an.

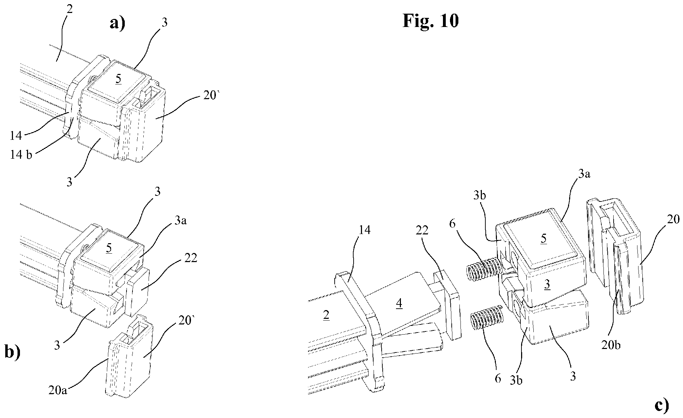

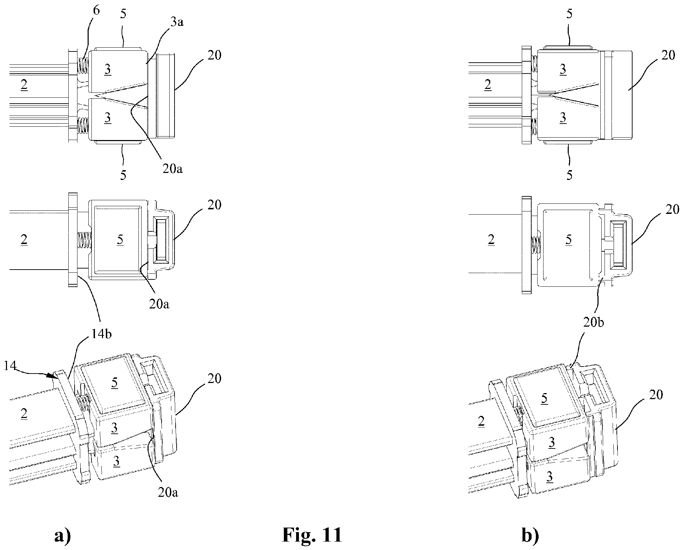

Statt des Sicherungsrings 23 können auch andere Befestigungsmittel zur Befestigung des Anschlags 20 an der Kolbenstange verwendet werden, wie z.B. eine Kappe, welche über den am hinteren Ende der Kolbenstange vorstehenden Zapfen 22 oder einen Endflansch der Kolbenstange geschoben und dort mittels Klemm- oder Rastelemente verklemmt oder verrastet wird. In den Figuren 10 und 11 ist ein entsprechendes Ausführungsbeispiel in zwei verschiedenen Ausführungsvarianten gezeigt. Bei dem Ausführungsbeispiel der Figur 10 ist der Anschlag 20 durch eine Kappe 20' gebildet, welche auf den vorstehenden Zapfen 22 der Kolbenstange 2 geschoben wird. In Figur 10a ist die Kappe 20' auf den Zapfen 22 aufgeschoben und in Figur 10b ist die Kappe 20' zur Verdeutlichung vom Zapfen 22 abgezogen dargestellt. Die Kappe 20' ist dabei mittels eines Klemm- oder Rastmechanismus am Zapfen 22 befestigbar. Bei über dem Zapfen 22 geschobener Kappe 20' bildet dessen Vorderfläche 20a für die Bremselemente 3 einen hinteren Anschlag. Die Bremselemente 3, welche im Wesentlichen keilförmig ausgebildet sind, sind entlang der an der Kolbenstange 2 angeordneten Schrägfläche 4 zwischen einer ersten Grenzstellung, in der sich das jeweilige Bremselement 3 in seiner Dämpfungsstellung befindet, und einer zweiten Grenzstellung, in der sich das Bremselement 3 in seiner Freilaufstellung befindet, beweglich gelagert. In der ersten Grenzstellung (Dämpfungsstellung) liegt die hintere Stirnfläche 3a der Bremselemente 3 an der Vorderfläche 20a der Kappe 20' an. In der zweiten Grenzstellung (Freilaufstellung) liegt die vordere Stirnfläche 3b der Bremselemente 3 an der Rückseite 14b des Flansches 14 an.

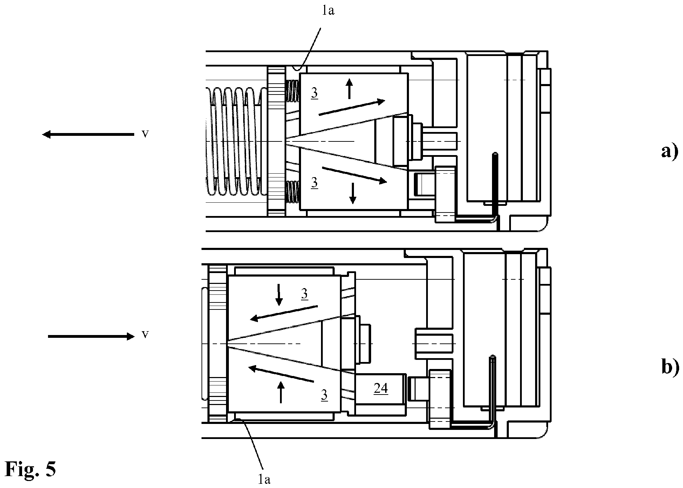

Die Funktionsweise der Dämpfungseinrichtung 11 der Figuren 3, 4 und 10 geht aus den Figuren 4 und 5 hervor. Figur 4 zeigt die Dämpfungseinrichtung 11 im Einbauszustand im Gehäuse 1, welches zur Verdeutlichung im Aufriss dargestellt ist. In Figur 5a ist die Stellung der Bremselemente 3 der Dämpfungseinrichtung 11 in der Stellung gezeigt, die sich selbsttätig einstellt, wenn die Kolbenstange in einer ersten Bewegungsrichtung aus dem Gehäuse herausgezogen wird. Die Bewegungsrichtung der Kolbenstange ist in Figur 5a mit dem Pfeil v gekennzeichnet. Beim Herausziehen der Kolbenstange 2 aus dem Gehäuse 1 bewegen sich die Bremselemente 3 auf der Schrägfläche 4 am hinteren Ende der Kolbenstange einerseits in longitudinaler Richtung nach hinten (also entgegen der Bewegungsrichtung der Kolbenstange) bis die hintere Stirnfläche 3a der Bremselemente 3 an der Vorderfläche 20a des Anschlag 20 anliegt und andererseits in radialer Richtung nach außen. Die Bewegung in longitudinaler Richtung nach hinten wird dabei durch die Haftreibung der Bremselemente 3 an der Innenfläche 1a hervorgerufen und durch die Rückstellkraft der Federn 6 unterstützt. Durch die Bewegung der Bremselemente 3 in radialer Richtung nach außen wird die Bremsfläche 5 jedes Bremselements 3 gegen eine Innenfläche 1a des Gehäuses 1 gedrückt. Dadurch wird ein erstes Bremsmoment erzeugt, welches die Bewegung der Kolbenstange 2 aus dem Gehäuse 1 dämpft. Der Bewegungsdämpfer befindet sich bei dieser Bewegungsrichtung in der Dämpfungsstellung (Lasthub), in der die Bewegung der Kolbenstange (und damit die Bewegung eines daran befestigten Bauteils) durch die Reibung zwischen der Bremsfläche 5 jedes Bremselements 3 und der Innenfläche 1a des Gehäuses 1 gebremst wird.

In Figur 5b ist die Stellung der Bremselemente 3 bei einer Bewegung der Kolbenstange in entgegengesetzter Richtung (also beim Hineinschieben der Kolbenstange in das Gehäuse) gezeigt. Beim Hineinschieben der Kolbenstange 2 in das Gehäuse 1 bewegen sich die Bremselemente 3 entlang der Schrägflächen 4 am hinteren Ende der Kolbenstange 2 zum einen in longitudinaler Richtung nach vorne (also entgegen der Bewegungsrichtung der Kolbenstange) und zum anderen in radialer Richtung nach innen. Durch die Bewegung in radialer Richtung nach innen haben die Bremsflächen 5 der Bremselemente 3 keinen Kontakt mehr zur Innenfläche 1a des Gehäuses 1. Die Bewegung der Kolbenstange 2 in das Innere das Gehäuses 1 erfolgt daher ohne ein durch eine Reibung zwischen den Bremselementen und der Innenfläche des Gehäuses hervorgerufenes Bremsmoment. Die Kolbenstange 2 kann daher in dieser Freilaufstellung (Leerhub) im Wesentlichen ungedämpft in das Gehäuse eingeschoben werden.

Wie weiterhin aus der Darstellung der Figuren 4 und 5b ersichtlich, greift der Ansatz 24 des Anschlags 20 zwischen die sich in elektrischem Kontakt befindlichen Kontakte 8a und 8b ein und schiebt diese auseinander, so dass der elektrische Kontakt unterbrochen wird, sobald die in das Gehäuse 1 eingeschobene Kolbenstange 2 ihre hintere Endposition erreicht hat (welche in den Figuren 4 und 5a dargestellt ist).

Bei dem Ausführungsbeispiel der Dämpfungseinrichtung 11 der Figuren 10 und 11 kann die Bremskraft der Bremselemente 3 in ihrer jeweiligen Dämpfungsstellung durch die Positionierung der den Anschlag 20 bildenden Anschlagfläche der Kappe 20' bezüglich der Schrägfläche 4 eingestellt werden. Dies wird durch die vergleichende Darstellung von zwei verschiedenen Ausführungsvarianten in Figur 11 verdeutlicht. In der Ausführungsvariante der Figur 11a liegt die hintere Stirnfläche 3a der Bremselemente 3 in der ersten Grenzstellung an der ebenen Vorderfläche 20a der Kappe 20' an. In dieser Ausführungsvariante bildet die ebene Vorderfläche 20a der Kappe 20' den Anschlag 20, der die axiale Bewegung der Bremselemente nach hinten begrenzt. In der in den Figuren 10 und 11b dargestellten Ausführungsvariante sind an der Vorderfläche des Anschlags 20 überstehende Rippen 20b vorgesehen. In der ersten Grenzstellung liegen die hinteren Stirnflächen 3a der Bremselemente 3 an diesen Rippen 20b an. Im Vergleich zu der Ausführungsvariante der Figur 11a, in der die plane Vorderfläche 20a der Kappe 20' den Anschlag 20 für die Begrenzung der axialen Bewegung der Bremselemente 3 bildet, bilden in der Ausführungsvariante der Figur 11b die Rippen 20b den Anschlag 20 und begrenzen die axiale Bewegung der Bremselemente 3 nach hinten. Durch die gegenüber der planen Vorderfläche 20a überstehenden Rippen 20b ist der Anschlag 20 im Vergleich zu der Ausführungsvariante der Figur 11a in axialer Richtung nach vorne verlagert. Dadurch liegen die Bremselemente 3 in radialer Richtung weiter innen und näher beieinander, wie sich aus einem Vergleich der oberen Darstellungen der Figuren 11a und 11b ergibt. Die Bremselemente 3 werden in der Ausführungsvariante der Figur 11b daher mit einer geringeren Bremskraft gegen die Innenfläche 1a des Gehäuses 1 gedrückt. Durch eine Veränderung der Dicke der überstehenden Rippen 20b kann in dem Ausführungsbeispiel der Figuren 10 und 11b die Bremskraft der Bremselemente in ihrer Dämpfungsstellung angepasst bzw. auf einen gewünschten Wert eingestellt werden.

Das in den Figuren 6 bis 9 dargestellte erfindungsgemäße zweite Ausführungsbeispiel des Bewegungsdämpfers entspricht im Grundaufbau dem ersten Ausführungsbeispiel der Figuren 1 bis 5 und 10. Sich entsprechende Bauteile sind in den beiden Ausführungsbeispielen mit gleichen Bezugszeichen versehen. Insoweit kann auf die detaillierte Beschreibung des ersten Ausführungsbeispiels Bezug genommen werden.

Im Vergleich zum ersten Ausführungsbeispiel unterscheidet sich das erfindungsgemäße zweite Ausführungsbeispiel im Wesentlichen nur durch die Ausbildung der Bremseinrichtung 11. Weiterhin ist beim zweiten Ausführungsbeispiel der Kontaktschalter 8 nicht am hinteren Ende des Gehäuses 1, sondern am vorderen Ende angeordnet, an dem sich die Öffnung 34 zum Einschieben bzw. Herausziehen der Kolbenstange 2 befindet. Diese Öffnung 34 ist in einem am Gehäuse durch einen Rastmechanismus befestigten Deckel 13 vorgesehen. Die hintere Stirnseite des Gehäuses 1 ist durch einen einstückig angeformten Deckel verschlossen.

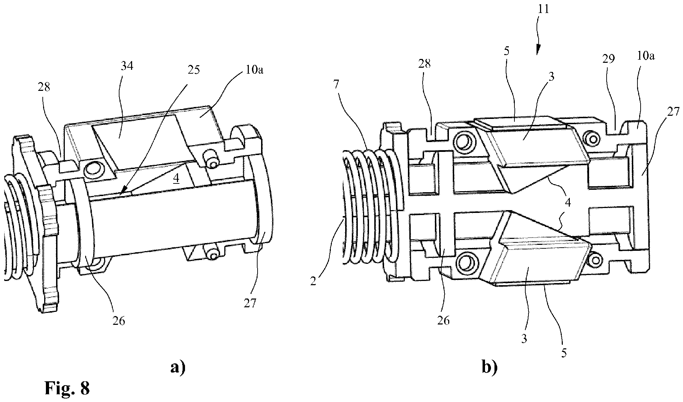

Die Bremseinrichtung 11 des erfindungsgemäßen zweiten Ausführungsbeispiels des Bewegungsdämpfers umfasst - wie auch das erste Ausführungsbeispiel - zwei Bremselemente 3 mit einer Bremsfläche 5 aus einem Weichkunststoff. Am hinteren Ende der Kolbenstange 2 sind wiederum Schrägflächen 4 vorgesehen, wobei jedem Bremselement 3 eine Schrägfläche 4 zugeordnet ist (Fig. 8a). Jede Schrägfläche 4 schließt mit der Längsachse A der Kolbenstange 2 einen spitzen Winkel α ein, der bevorzugt größer als 7° und bei dem hier zeichnerisch dargestellten Ausführungsbeispiel 12° beträgt. Das hintere Ende der Kolbenstange 2 ist bei dem zweiten Ausführungsbeispiel im Wesentlichen zylindrisch ausgebildet und weist an zwei diametral gegenüber liegenden Stellen kanalförmige Einschnitte 25 auf (Fig. 8a). Die Schrägflächen 4 sind am nach hinten auslaufenden Ende der kanalförmigen Einschnitte 25 ausgebildet und steigen nach hinten an. Im Abstand zu dem Flansch 14 ist ein vorderer Ringflansch 26 vorgesehen, der um den gesamten Umfang des hinteren Endes der Kolbenstange 2 umläuft. Ein weiterer Ringflansch 27 schließt die Kolbenstange 2 am hinteren Ende ab.

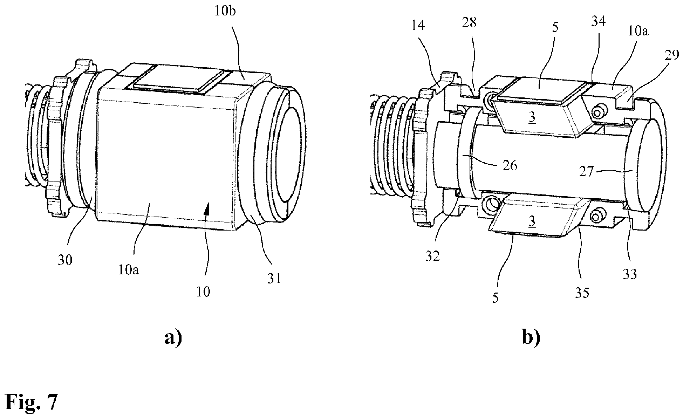

Am hinteren Ende der Kolbenstange 2 ist ein Führungselement 10 angeordnet, welches das hintere Ende der Kolbenstange zwischen dem Flansch 14 und dem hinteren Ringflansch 27 umgreift (Fig. 7a). Das Führungselement 10 ist zweiteilig ausgebildet, wobei die beiden Teile 10a, 10b im Wesentlichen halbrohrförmig ausgestaltet und symmetrisch zur Längsmittelebene des Führungselements sind. An seinem Außenumfang weist das Führungselement 10 zwei Ringnuten 28, 29 auf, in welche O-Ringe 30, 31 eingespannt sind (Figuren 7b und 7a, die O-Ringe sind in Fig. 7b nicht gezeigt). Durch die O-Ringe 30, 31 werden die beiden Teile 10a, 10b des Führungselements 10 längs dessen Mittelebene zusammengehalten und um das hintere Ende der Kolbenstange 2 angeordnet. Am Innenumfang des Führungselements 10 sind an seinem vorderen und an seinem hinteren Ende Führungsnuten 32, 33 vorgesehen, deren Breite größer ist als die Breite der Ringflansche 26, 27 am hinteren Ende der Kolbenstange 2 (im dargestellten Ausführungsbeispiel etwa doppelt so groß).

Die Ringflansche 26, 27 am hinteren Ende der Kolbenstange 2 greifen in die Führungsnuten 32, 33 am Innenumfang des Führungselements 10 ein. Das Führungselement 10 ist auf diese Weise, begrenzt durch die Ringflansche 26 und 27, zwischen einer ersten Grenzstellung und einer zweiten Grenzstellung gegenüber der Kolbenstange 2 verschiebbar. Dadurch kann das Führungselemente 10 in longitudinaler Richtung (also in Richtung der Längsachse der Kolbenstange) zwischen der ersten Grenzstellung und der zweiten Grenzstellung verschoben werden, wobei der Verschiebeweg durch die Breite der Führungsnuten 32, 33 am Innenumfang des Führungselements 10 begrenzt ist.

Am Außenumfang des Führungselements 10 sind zwischen den Führungsnuten 32, 33 Öffnungen 34, 35 in der Wandung des Führungselements vorgesehen (Fig. 7b). Die Öffnungen 34, 35 weisen im vorderen und hinteren Bereich schräge Flächen 34a, 35a auf. Die Schräge der Flächen 34a, 35a ist so auf die Schräge der Schrägflächen 4 am hinteren Ende der Kolbenstange 2 abgestimmt, dass sie mit dieser einen rechten Winkel (90°) einschließen.

In die Öffnungen 34, 35 sind keilförmige Bremselemente 3 mit Bremsflächen 5 eingefügt (Fig. 7b und 8b). Die Form der Bremselemente 3 ist dabei so gewählt, dass diese passgenau einerseits an ihrer jeweiligen Unterseite auf der Schrägfläche 4 am hinteren Ende der Kolbenstange 2 aufliegen und andererseits an den schrägen Flächen 34a, 35a der Öffnungen 34 und 35 im Führungselement 10 anliegen.

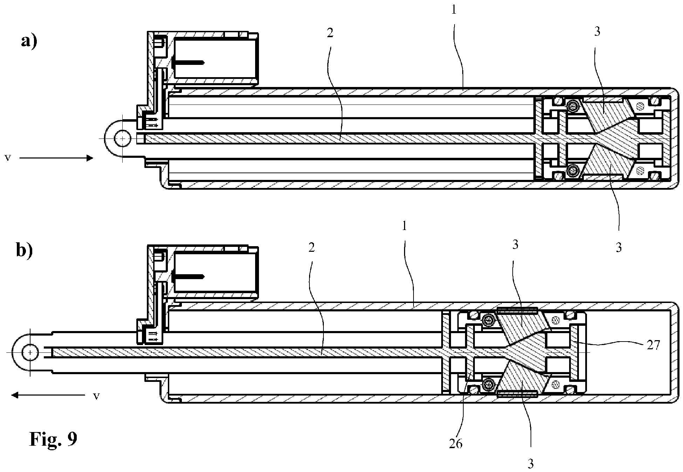

Die Funktionsweise der Bremseinrichtung 11 des erfindungsgemäßen zweiten Ausführungsbeispiels gemäß den Darstellungen in den Figuren 6 bis 8 ist aus Figur 9 ersichtlich. Figur 9a zeigt dabei die Stellung der Bremseinrichtung 11 im Leerhub (Freilauf) und Figur 9b zeigt die Stellung der Bremseinrichtung 11 im Lasthub.

Wird die Kolbenstange 2, wie in Figur 9b gezeigt, aus dem Gehäuse 1 herausgezogen (Bewegungsrichtung v), wird das Führungselement 10 in seine erste Grenzstellung geschoben (Figur 9b), in der die vordere Seitenfläche der Nut 32 an der Vorderseite des Ringflansches 26 der Kolbenstange 2 anschlägt. In dieser Stellung werden die Bremselemente 3 durch das Führungselement 10 entlang der Schrägflächen 4 am hinteren Ende der Kolbenstange 2 zum einen nach hinten (also in entgegen gesetzter Richtung zur Bewegungsrichtung der Kolbenstange) und zum anderen radial nach außen verschoben. Die Bremselemente 3 verschieben sich dabei auch längs der schrägen Flächen 34a, 35a der Öffnungen 34 und 35 im Führungselement 10 schräg radial nach außen. Durch die Bewegung der Bremselemente 3 radial nach außen kommen deren Bremsflächen 5 in Kontakt mit der Innenfläche 1a des Gehäuses und werden gegen diese Innenfläche gepresst. Aufgrund der Reibung der Bremsflächen 5 an der Innenfläche 1a des Gehäuses 1 wird in dieser Dämpfungsstellung des Dämpfungselements 11 ein Bremsmoment erzeugt, welches die Bewegung der Kolbenstange 2 aus dem Gehäuse 1 abbremst.

Wird die Kolbenstange wie in Figur 9a gezeigt, in das Gehäuse 1 hineingeschoben (Bewegungsrichtung v), verschiebt sich zunächst das Führungselement 10 aufgrund der Haftreibung des Reibungselements 3 an der Innenfläche 1a in seine zweite Grenzstellung, in der das vordere stirnseitige Ende des Führungselements 10 an der Rückseite 14b des Flansches 14 der Kolbenstange 2 anschlägt. Durch die Bewegung des Führungselements 10 in longitudinaler Richtung nach vorne (also entgegen der Bewegungsrichtung der Kolbenstange 2) schiebt das Führungselement 10 die Bremselemente 2 in longitudinaler Richtung nach vorne und in radialer Richtung nach innen. Durch die Bewegung der Bremselemente 3 in radialer Richtung nach innen wird der Kontakt der Bremsfläche 5 an der Innenfläche 1a des Gehäuses 1 gelöst. Beim Einschieben der Kolbenstange 2 in das Gehäuse 1 befindet sich das Dämpfungselements 11 daher in der Freilaufstellung, in der keine Reibung zwischen der Bremsfläche 5 der Bremselemente 3 und der Innenfläche 1a des Gehäuses 1 mehr vorliegt, weshalb bei dieser Bewegung kein bzw. ein gegenüber dem ersten Bremsmoment wesentlich geringeres zweites Bremsmoment erzeugt wird.

Das zweite Bremsmoment wird im Wesentlichen durch die Reibung der O-Ringe 30, 31 an der Innenfläche 1a des Gehäuses 1 bestimmt. Ein höheres zweites Bremsmoment kann erzielt werden, wenn der Außendurchmesser der O-Ringe 30, 31 so gewählt wird, dass diese über dem Außenumfang des Führungselements 10 vorstehen. Je weiter die O-Ringe über dem Außenumfang des Führungselements 10 vorstehen, desto größer ist das zweite Bremsmoment, welches jedoch in jedem Fall geringer ist als das erste Bremsmoment, welches in der Dämpfungsstellung des Dämpfungselements 11 (Lasthub) erreicht wird.

## Patentansprüche

1. Bewegungsdämpfer zur Dämpfung einer translatorischen Bewegung eines Bauteils relativ zu einem stationären Lagerbauteil, wobei der Bewegungsdämpfer ein Gehäuse (1) und eine gegenüber dem Gehäuse verschiebbare Kolbenstange (2) sowie wenigstens ein an der Kolbenstange gelagertes Bremselement (3) umfasst, welches bei Bewegung der Kolbenstange (2) in einer Bewegungsrichtung zur Erzeugung eines Bremsmoments gegen eine Innenfläche (1a) des Gehäuses gepresst wird, wobei sich das oder jedes Bremselement (3) bei Bewegung der Kolbenstange (2) in einer ersten Bewegungsrichtung in einer Dämpfungsstellung befindet, in der das Bremselement (3) in Kontakt mit der Innenfläche (1a) des Gehäuses (1) steht und das Bremselement (3) bei Bewegung der Kolbenstange (2) in einer zur ersten Bewegungsrichtung entgegengesetzten zweiten Bewegungsrichtung selbsttätig in eine Freilaufstellung verschoben wird, in der das Bremselement (3) außer Eingriff mit der Innenfläche (1a) des Gehäuses (1) steht, **dadurch gekennzeichnet, dass** das oder jedes Bremselement (3) in einem Führungselement (10) frei beweglich gelagert ist, wobei das Führungselement (10) an der Kolbenstange angeordnet ist und zwischen einer ersten Grenzstellung und einer zweiten Grenzstellung gegenüber der Kolbenstange (2) verschiebbar ist.

2. Bewegungsdämpfer nach Anspruch 1, **dadurch gekennzeichnet, dass** das oder jedes Bremselement (3) entlang einer an der Kolbenstange angeordneten Schrägfläche (4) beweglich gelagert ist, wobei die Schrägfläche mit der Längsachse (A) der Kolbenstange einen spitzen Winkel (α ) einschließt.

3. Bewegungsdämpfer nach Anspruch 2, **dadurch gekennzeichnet, dass** der Winkel, den die Schrägfläche (4) mit der Längsachse (A) der Kolbenstange einschließt größer als 7° ist.

4. Bewegungsdämpfer nach einem der voranstehenden Ansprüche, **dadurch gekennzeichnet, dass** das oder jedes Bremselement (3) eine aus einem Weichkunststoff gebildete Bremsfläche (5) aufweist.

5. Bewegungsdämpfer nach einem der voranstehenden Ansprüche, **dadurch gekennzeichnet, dass** die Bewegung des oder jedes Bremselements (3) von der Dämpfungsstellung in die Freilaufstellung entgegen der Rückstellkraft einer Feder (6) erfolgt.

6. Bewegungsdämpfer nach einem der voranstehenden Ansprüche, **dadurch gekennzeichnet, dass** die Kolbenstange (2) in dem Gehäuse (1) gegen die Rückstellkraft einer Kolbenfeder (7) beweglich gelagert ist.

7. Bewegungsdämpfer nach Anspruch 1, **dadurch gekennzeichnet, dass** das oder jedes Bremselement (3) durch das Führungselement (10) von seiner Dämpfungsstellung in seine Freilaufstellung verschoben wird, wenn sich nach einer Änderung der Bewegungsrichtung der Kolbenstange (2) gegenüber dem Gehäuse (1) das Führungselement (10) von seiner ersten Grenzstellung in seine zweite Grenzstellung bewegt, und umgekehrt.

8. Bewegungsdämpfer nach einem der voranstehenden Ansprüche, **dadurch gekennzeichnet, dass** das oder jedes Bremselement (3) im Wesentlichen keilförmig ist.

9. Bewegungsdämpfer nach einem der voranstehenden Ansprüche, **dadurch gekennzeichnet, dass** das oder jedes Bremselement (3) entlang einer an der Kolbenstange angeordneten Schrägfläche (4) zwischen einer ersten Grenzstellung, in der sich das Bremselement (3) in seiner Dämpfungsstellung befindet, und einer zweiten Grenzstellung, in der sich das Bremselement (3) in seiner Freilaufstellung befindet, beweglich gelagert ist.

10. Bewegungsdämpfer nach Anspruch 9, **dadurch gekennzeichnet, dass** die hintere Stirnfläche (3a) des oder jedes Bremselements (3) in der ersten Grenzstellung an einem an der Kolbenstange (2) befestigten Anschlag (20) anliegt und dass die vordere Stirnfläche (3b) des oder jedes Bremselements (3) in der zweiten Grenzstellung an einem an der Kolbenstange (2) angeordneten Flansch (14) anliegt.

11. Bewegungsdämpfer nach Anspruch 10, **dadurch gekennzeichnet, dass** die Bremskraft des oder jedes Bremselements (3) in seiner Dämpfungsstellung durch die Anordnung das Anschlags (20) bezüglich der Schrägfläche (4), insbesondere durch den Abstand des Anschlags (20) zur Schrägfläche (4), einstellbar ist.

12. Bewegungsdämpfer nach einem der voranstehenden Ansprüche, **dadurch gekennzeichnet, dass** an dem Gehäuse (1) ein Kontaktschalter (8) mit zwei elektrischen Kontakten (8a, 8b) und an der Kolbenstange (2) ein Steuerglied (9) zum Öffnen bzw. Schließen der Kontakte (8a, 8b) angeordnet ist.

## Claims

1. Motion damper for damping a translational movement of one component relative to a stationary mounting component, wherein the motion damper comprises a housing (1) and a piston rod (2) which is displaceable relative to the housing, as well as at least one braking element (3) which is mounted on the piston rod and which, upon movement of the piston rod (2) in one direction of movement, is pressed against an inner surface (1a) of the housing to generate a braking torque, wherein, upon movement of the piston rod (2) in a first direction of movement,the or each braking element (3) is in a damping position in which the braking element (3) is in contact with the inner surface (1a) of the housing (1), and upon movement of the piston rod (2) in a second direction of movement opposite the first direction of movement, the braking element (3) is automatically displaced into a neutral position in which the braking element (3) is disengaged from the inner surface (1a) of the housing (1), **characterised in that** the or each braking element (3) is mounted in a guide element (10) so as to be freely movable, wherein the guide element (10) is disposed on the piston rod and displaceable relative to the piston rod (2) between a first end position and a second end position.

2. Motion damper according to claim 1, **characterised in that** the or each braking element (3) is mounted so as to be movable along an inclined surface (4) disposed on the piston rod, wherein the inclined surface forms an acute angle (α) with the longitudinal axis (A) of the piston rod.

3. Motion damper according to claim 2, **characterised in that** the angle which the inclined surface (4) forms with the longitudinal axis (A) of the piston rod is greater than 7°.

4. Motion damper according to one of the preceding claims, **characterised in that** the or each braking element (3) has a braking surface (5) made of soft plastic.

5. Motion damper according to one of the preceding claims, **characterised in that** the movement of the or each braking element (3) is effected from the damping position to the neutral position against the return force of a spring (6).

6. Motion damper according to one of the preceding claims, **characterised in that** the piston rod (2) is mounted in the housing (1) so as to be movable against the return force of a plunger spring (7).

7. Motion damper according to claim 1, **characterised in that** the or each braking element (3) is displaced by the guide element (10) from its damping position to its neutral position when, after a change of direction of movement of the piston rod (2) relative to the housing (1), the guide element (10) moves from its first end position to its second end position, and vice versa.

8. Motion damper according to one of the preceding claims, **characterised in that** the or each braking element (3) is substantially wedge-shaped.

9. Motion damper according to one of the preceding claims, **characterised in that** the or each braking element (3) is mounted so as to be movable along an inclined surface (4) disposed on the piston rod between a first end position in which the braking element (3) is in its damping position, and a second end position in which the braking element (3) is in its neutral position.

10. Motion damper according to claim 9, **characterised in that** the rear end face (3a) of the or each braking element (3) in the first end position abuts against a stop (20) attached to the piston rod (2) and **in that** the front end face (3b) of the or each braking element (3) in the second end position abuts against a flange (14) disposed on the piston rod (2).

11. Motion damper according to claim 10, **characterised in that** the braking force of the or each braking element (3) in its damping position is adjustable by the arrangement of the stop (20) relative to the inclined surface (4), in particular by the distance of the stop (20) from the inclined surface (4).

12. Motion damper according to one of the preceding claims, **characterised in that** on the housing (1) is disposed a contact switch (8) with two electrical contacts (8a, 8b) and on the piston rod (2) is disposed a control member (9) for opening or closing the contacts (8a, 8b).

## Revendications

1. Amortisseur de déplacement servant à amortir un déplacement de translation d'un composant par rapport à un composant de palier stationnaire, dans lequel l'amortisseur de déplacement comprend un boîtier (1) et une tige de piston (2) pouvant être coulissée par rapport au boîtier ainsi qu'au moins un élément de freinage (3) monté au niveau de la tige de piston, lequel est pressé, lors du déplacement de la tige de piston (2) dans une direction de déplacement, contre une surface intérieure (1a) du boîtier afin de produire un couple de freinage, dans lequel l'élément de freinage ou chaque élément de freinage (3) se trouve, lors du déplacement de la tige de piston (2) dans une première direction de déplacement, dans une position d'amortissement, dans laquelle l'élément de freinage (3) se trouve en contact avec la surface intérieure (1a) du boîtier (1) et l'élément de freinage (3) est coulissé, lors du déplacement de la tige de piston (2) dans une deuxième direction de déplacement opposée à la première direction de déplacement, de manière autonome dans une position de course libre, dans laquelle l'élément de freinage (3) n'est pas en prise avec la surface intérieure (1a) du boîtier (1), **caractérisé en ce que** l'élément de freinage ou chaque élément de freinage (3) est monté avec une liberté de déplacement dans un élément de guidage (10), dans lequel l'élément de guidage (10) est disposé au niveau de la tige de piston et il peut être coulissé par rapport à la tige de piston (2) entre une première position limite et une deuxième position limite.

2. Amortisseur de déplacement selon la revendication 1, **caractérisé en ce que** l'élément de freinage ou chaque élément de freinage (3) est monté de manière mobile le long d'une surface inclinée (4) disposée au niveau de la tige de piston, dans lequel la surface inclinée forme avec l'axe longitudinal (A) de la tige de piston un angle aigu (α).

3. Amortisseur de déplacement selon la revendication 2, **caractérisé en ce que** l'angle, que la surface inclinée (4) forme avec l'axe longitudinal (A) de la tige de piston, est supérieur à 7°.

4. Amortisseur de déplacement selon l'une quelconque des revendications précédentes, **caractérisé en ce que** l'élément de freinage ou chaque élément de freinage (3) présente une surface de freinage (5) formée à partir d'une matière plastique souple.

5. Amortisseur de déplacement selon l'une quelconque des revendications précédentes, **caractérisé en ce que** le déplacement de l'élément de freinage ou de chaque élément de freinage (3) est effectué depuis la position d'amortissement dans la position de course libre à l'encontre de la force de rappel d'un ressort (6).

6. Amortisseur de déplacement selon l'une quelconque des revendications précédentes, **caractérisé en ce que** la tige de piston (2) est montée de manière mobile dans le boîtier (1) à l'encontre de la force de rappel d'un ressort de piston (7).

7. Amortisseur de déplacement selon la revendication 1, **caractérisé en ce que** l'élément de freinage ou chaque élément de freinage (3) est coulissé par l'élément de guidage (10) depuis sa position d'amortissement dans sa position de course libre, lorsqu'après un changement de la direction de déplacement de la tige de piston (2) par rapport au boîtier (1), l'élément de guidage (10) se déplace depuis sa première position limite dans sa deuxième position limite, et inversement.

8. Amortisseur de déplacement selon l'une quelconque des revendications précédentes, **caractérisé en ce que** l'élément de freinage ou chaque élément de freinage (3) est sensiblement cunéiforme.

9. Amortisseur de déplacement selon l'une quelconque des revendications précédentes, **caractérisé en ce que** l'élément de freinage ou chaque élément de freinage (3) est monté de manière mobile le long d'une surface inclinée (4) disposée au niveau de la tige de piston entre une première position limite, dans laquelle l'élément de freinage (3) se trouve dans sa position d'amortissement, et une deuxième position limite, dans laquelle l'élément de freinage (3) se trouve dans sa position de course libre.

10. Amortisseur de déplacement selon la revendication 9, **caractérisé en ce que** la surface frontale (3a) arrière de l'élément de freinage ou de chaque élément de freinage (3) repose, dans la première position limite, au niveau d'une butée (20) fixée au niveau de la tige de piston (2), et **en ce que** la surface frontale (3b) avant de l'élément de freinage ou de chaque élément de freinage (3) repose, dans la deuxième position limite, au niveau d'un flasque (14) disposé au niveau de la tige de piston (2).

11. Amortisseur de déplacement selon la revendication 10, **caractérisé en ce que** la force de freinage de l'élément de freinage ou de chaque élément de freinage (3) dans sa position d'amortissement peut être réglée par l'agencement de la butée (20) par rapport à la surface inclinée (4), en particulier par la distance de la butée (20) par rapport à la surface inclinée (4).

12. Amortisseur de déplacement selon l'une quelconque des revendications précédentes, **caractérisé en ce qu'**un commutateur de contact (8) pourvu de deux contacts (8a, 8b) électriques est disposé au niveau du boîtier (1), et **en ce qu'**un organe de commande (9) servant à ouvrir ou à fermer les contacts (8a, 8b) est disposé au niveau de la tige de piston (2).
